# DEMANDE DE BREVET EUROPEEN

(11) **EP 4 027 619 A1**
(43) Date de publication de la demande: **13.07.2022**
(21) Numéro de dépôt: 22150414.5
(22) Date de dépôt: 06.01.2022
(51) Int. Cl.: H04L 67/12, H04L 69/18, H04L 69/22, H04W 4/42, H04W 4/48

(54) **SYSTÈME D EXTRÉMITÉ POUR UN SYSTÈME DE COMMUNICATION AVIONIQUE ET SYSTÈME DE COMMUNICATION AVIONIQUE ASSOCIÉ**

(30) Priorité: 08.01.2021 FR 2100167
(71) Demandeur: THALES, 92400 Courbevoie (FR)
(72) Inventeur: SITBON, Arnaud, 33700 MERIGNAC (FR); FINAZ, Yves, 33700 MERIGNAC (FR)
(74) Mandataire: Lavoix

(57) **Abrégé**

La présente invention concerne un système d'extrémité (24A) comprenant au moins un port d'entrée (31) apte à recevoir des trames, et une table de configuration (33) comprenant pour chaque valeur d'identification d'une trame reçue des paramètres de traitement de cette trame.

Le système d'extrémité (24A) est apte à déterminer un protocole de traitement entre un protocole de type ARINC 664 P7 et un protocole de type IEEE 802 de chaque trame reçue via le port d'entrée (31) exclusivement à partir des paramètres de traitement correspondant à la valeur d'identification de cette trame dans la table de configuration (33), indépendamment du type de cette trame.

## Description

La présente invention concerne un système d'extrémité pour un système de communication avionique.

La présente invention concerne également un système de communication avionique associé à ce système d'extrémité.

L'invention permet en particulier de mettre en œuvre un réseau avionique mixte transmettant des trames conformes au protocole de type ARINC 664 P7 et à un protocole de type IEEE 802 différent de ce protocole ARINC 664 P7.

De manière connue en soi, la norme ou le standard ARINC 664 permet de mettre en œuvre des réseaux informatiques avioniques. Dérivée du standard Ethernet, elle permet en particulier d'adapter ce standard au contexte avionique et notamment, aux contraintes avioniques. On peut noter que la norme A664 est, du fait des adaptations, incompatible de la norme Ethernet IEEE 802.3.

La norme ARINC 664 est composée de plusieurs parties, comme par exemple : une partie dédiée aux concepts systèmes, une partie dédiée à la couche physique, une partie dédiée aux services et protocole (IP).

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en œuvre des fonctions essentielles de l'avion et présente ainsi le plus grand nombre de contraintes.

Ainsi, un réseau avionique mis en œuvre selon la partie P7 présente potentiellement un réseau ségrégué, redondant et déterministe. Le déterminisme de ce réseau signifie en particulier que chaque trame émise atteint sa destination en un temps maximal connu. La ségrégation signifie en particulier qu'un ou plusieurs abonnés qui ne respectent pas les contraintes temporelles de la norme A664 P7 ne peuvent pas perturber le bon fonctionnement du réseau.

Dans certains réseaux avioniques, il est également possible d'utiliser un ou plusieurs protocoles de la famille IEEE 802. De manière connue en soi, cette famille comprend notamment le protocole Ethernet 802.3 ou le protocole WiFi IEEE 802.11.

La norme A664 P7 a été créée pour permettre l'utilisation d'un réseau de données dans un environnement critique. Elle permet plus particulièrement une ségrégation des flux de données avec une granularité très faible, ce que ne permettent pas les protocoles de la famille IEEE 802.

Dans le monde avionique, on peut aussi utiliser le protocole Ethernet pour transférer des données qui peuvent être, par exemple, des données de maintenance, de téléchargement, de divertissement de passagers et/ou des fonctions de service pour l'équipage relatives à différents systèmes avioniques. Ainsi, en cas de perte de ces données, elles peuvent être retransmises de nouveau sans créer de risque pour la sécurité de l'avion.

Classiquement dans un avion, les réseaux de type ARINC 664 P7 et de type IEEE 802 sont ségrégués l'un de l'autre. Cette ségrégation est obtenue en utilisant des moyens physiques différents pour mettre en oeuvre ces réseaux.

Cela signifie en particulier que, pour assurer une telle ségrégation, ces réseaux utilisent des commutateurs et des moyens de transmission physiquement différents.

On conçoit alors que ce type de ségrégation implique au moins un doublement de chaque composante physique mettant en oeuvre ces réseaux. Cela implique alors de nombreux problèmes en termes d'encombrement, de consommation électrique et de poids dans une structure accueillant ces réseaux telle qu'un avion.

Dans l'état de la technique, on connait déjà quelques exemples de réseaux dits mixtes, c'est-à-dire des réseaux à la fois de type ARINC 664 P7 et de type IEEE 802.

Ainsi, par exemple, la demande FR 18 74166 de la Demanderesse divulgue un système avionique mixte mettant en oeuvre une mixabilité des protocoles ARINC 664 P7 et Ethernet à routage prédéterminé.

Notamment, un tel système comprend des commutateurs qui sont adaptés pour déterminer à la réception de chaque trame le protocole de celle-ci et pour traiter ainsi cette trame conformément au protocole déterminé.

Le système décrit dans le document précité comprend en outre des équipements, appelés également « End System » en anglais ou « Système d'extrémité » en français. Tout comme les commutateurs, les systèmes d'extrémité doivent être adaptés pour traiter les flux mixtes. Le fonctionnement de ces systèmes d'extrémité ne s'avère toutefois pas toujours optimal.

La présente invention a pour but d'optimiser le fonctionnement des systèmes d'extrémité d'un système avionique mixte.

À cet effet, l'invention a pour objet un système d'extrémité pour un système de communication avionique, le système de communication avionique comprenant en outre une pluralité de commutateurs raccordés entre eux pour former un ou plusieurs réseaux informatiques, le système d'extrémité étant configuré pour être raccordé à au moins l'un des commutateurs pour recevoir et/ou émettre des données numériques sous la forme de trames à travers ce commutateur;
chaque trame ayant un champ d'identification et étant de premier type ou deuxième type, le champ d'identification de chaque trame définissant une valeur d'identification, les trames de premier type étant conformes à un protocole de type ARINC 664 P7 et les trames de deuxième type étant conformes à un protocole de type IEEE 802, l'ensemble des trames de premier type ayant une même valeur d'identification formant un même flux de premier type et l'ensemble des trames de deuxième type ayant une même valeur d'identification formant un même flux de deuxième type ;
le système d'extrémité étant caractérisé en ce qu'il comprend au moins un port d'entrée apte à recevoir des trames, et une table de configuration comprenant pour chaque valeur d'identification des paramètres de traitement des trames ayant cette valeur d'identification ; et
en ce qu'il est apte à déterminer un protocole de traitement de chaque trame reçue via le port d'entrée exclusivement à partir des paramètres de traitement correspondant à la valeur d'identification de cette trame dans la table de configuration, indépendamment du type de cette trame.

Suivant d'autres aspects avantageux de l'invention, le système d'extrémité comprend une ou plusieurs des caractéristiques suivantes, prise(s) isolément ou suivant toutes les combinaisons techniquement possibles :
- la valeur d'identification est une adresse de destination de la trame ;
- le champ d'identification de chaque trame correspond au champ MAC DEST de cette trame ;
- l'ensemble des valeurs d'identification des trames de chaque type et les paramètres de traitement correspondants sont déterminés de manière statique dans la table de configuration ;
- pour chaque valeur d'identification, les paramètres de traitement comprennent un paramètre indiquant la nécessité d'une gestion de redondance de chaque trame ayant cette valeur d'identification ;
- au moins un port de sortie apte à émettre des trames de premier type et/ou de deuxième type ;
- le système est configuré pour émettre chaque trame de deuxième type selon une période de cadencement prédéfinie par la valeur d'identification de cette trame ;
- chaque période de cadencement est définie par les paramètres de traitement associés à la valeur d'identification correspondante ;
- le système est configuré pour émettre chaque trame de deuxième type par remplissage de la bande passante disponible après l'émission des trames de premier type correspondantes.

La présente invention a également pour objet un système de communication avionique comprenant au moins deux systèmes d'extrémité tels que définis ci-dessus et au moins un commutateur connecté à chacun des systèmes d'extrémité.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un aéronef comportant un réseau avionique de type ARINC 664 P7 et un réseau avionique de type IEEE 802 ;
[Fig 2] la figure 2 est une vue schématique d'un système de communication selon l'invention, le système de communication mettant en oeuvre les réseaux avioniques de la figure 1 ;
[Fig 3] la figure 3 est une vue schématique de trames transmises par le système de communication de la figure 2 ;
[Fig 4] la figure 4 est une vue schématique d'un système d'extrémité faisant partie du système de communication de la figure 2 ;
[Fig 5] la figure 5 est une vue schématique de la distribution d'une bande passante mise en oeuvre par le système d'extrémité de la figure 4, selon un premier mode de réalisation de l'invention ; et
[Fig 6] la figure 6 est une vue schématique de la distribution d'une bande passante mise en oeuvre par le système d'extrémité de la figure 4, selon un deuxième mode de réalisation de l'invention.

Dans tout ce qui suit, toute mention d'une norme ou d'un standard, notamment d'une norme informatique, fait référence à des principes généraux de cette norme qui sont bien connus de l'homme du métier et qui sont indépendants de différentes versions de cette norme, sauf mention explicite.

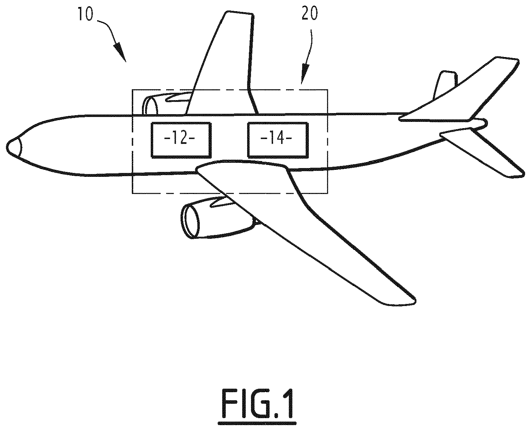

La figure 1 illustre un aéronef 10 tel qu'un avion.

L'aéronef 10 comprend un réseau avionique 12 de type ARINC 664 P7 et un réseau avionique 14 de type IEEE 802.

Le réseau avionique 12 permet de transmettre des données sensibles entre différents systèmes avioniques. Par donnée sensible, on comprend notamment toute donnée dont la perte ou un délai en transmission peut avoir une influence sur la sécurité de l'aéronef 10.

Le réseau avionique 14 permet de transmettre des données moins sensibles en comparaison avec le réseau avionique 12. Ainsi, par exemple, ces données correspondent à des données de maintenance échangées entre l'aéronef 10 et le sol et/ou à des données fonctionnelles échangées avec l'équipage et/ou à des données de divertissement des passagers et/ou à tout autre type de données.

Les données numériques circulant dans les deux réseaux 12, 14 se présentent respectivement sous la forme de trames de premier type et de trames de deuxième type.

Ainsi, les trames de premier type sont conformes au protocole de type ARINC 664 P7 et les trames de deuxième type sont conformes au protocole de type IEEE 802.

En particulier, par « protocole de type IEEE 802 », on entend l'un des protocoles de la famille de protocoles IEEE 802. Un tel protocole est par exemple le protocole de type Ethernet 802.3 ou alors l'un des protocoles de type 802.1xxx, c'est-à-dire le protocole de type WiFi IEEE 802.11, le protocole de type 802.1Q ou encore le protocole de type MilStd 1553.

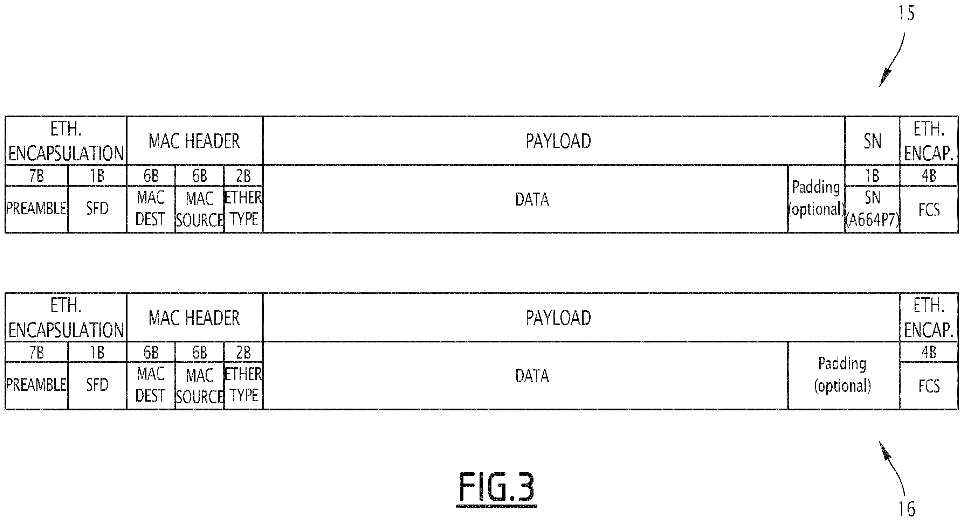

Un exemple d'une trame de chaque type est illustré sur la figure 3. En particulier, en référence à cette figure, l'exemple d'une trame de premier type est désigné par la référence numérique « 15 » et l'exemple d'une trame de deuxième type est désigné par la référence numérique « 16 ».

Chaque trame transmise dans le réseau 12, 14 correspondant comprend un champ d'identification.

Dans l'exemple décrit, ce champs d'identification est compris dans un entête de la trame et forme par exemple un champ appelé « MAC DEST ». Sur la figure 3, l'entête est dénoté par la référence « MAC HEADER ».

Comme cela est connu en soi, le champ MAC DEST désigne l'adresse MAC de l'équipement destinataire de la trame correspondante.

Chaque champ d'indentification prend une valeur d'identification qui, dans l'exemple décrit, correspond alors à l'adresse MAC de l'équipement destinataire de la trame correspondante. Autrement dit, la valeur d'identification définit un lien virtuel (appelé également VL) dans le cas des trames du protocole de type ARINC 664 P7.

Selon d'autres exemples de réalisation, le champs d'identification est formé par tout autre champ de l'entête de la trame comme par exemple le champ MAC SOURCE désignant l'adresse MAC de l'équipement émetteur de la trame correspondante.

Selon encore d'autres exemples de réalisation, le champs d'identification est formé par au moins une partie du champ des données utiles de la trame.

De manière générale, le champ d'identification d'une trame doit être compris comme tout champ de la trame permettant de déterminer les règles de commutation de cette trame au sein d'un commutateur donné comme cela sera expliqué par la suite.

L'ensemble des trames de premier type ayant une même valeur d'identification forment un même flux de premier type et l'ensemble de deuxième type ayant une même valeur d'identification forment un même flux de deuxième type.

Autrement dit, chaque flux de chaque type est formé de l'ensemble des trames ayant une même valeur d'identification. Ainsi, le champ d'identification de chaque trame présente également un identifiant du flux auquel cette trame est associée.

Selon l'invention, les réseaux avioniques 12 et 14 sont mis en oeuvre par un même système physique de communication avionique 20.

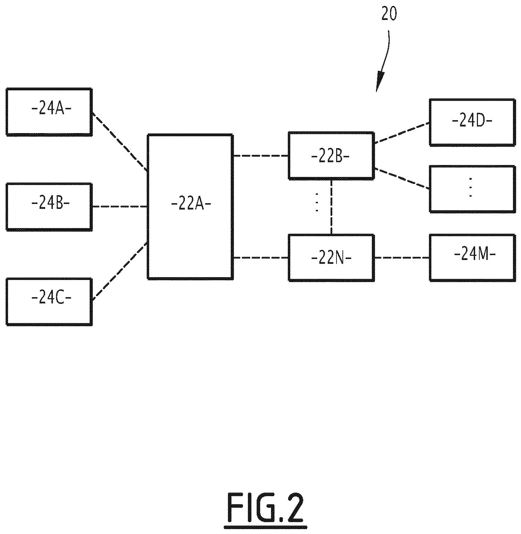

Un exemple d'un tel système de communication avionique 20 est illustré sur la figure 2.

Ainsi, en référence à cette figure, ce système de communication 20 comprend une pluralité de commutateurs 22A,...,22N et une pluralité de systèmes d'extrémité 24A,...,24M. Le nombre de ces différentes composantes et la manière de leur interconnexion peuvent bien entendu varier en fonction des exemples.

Les commutateurs 22A,...,22N sont reliés entre eux par des moyens de transmission présentant également par exemple un câble à paire torsadée ou tout autre type de câble permettant une transmission bidirectionnelle de données ou encore des liaisons sans fil transmettant des données numériques via des ondes radioélectriques.

Les commutateurs 22A,...,22N sont par exemple sensiblement analogues entre eux. Ainsi, dans l'exemple décrit, chaque commutateur 22A,...,22N est apte à recevoir chaque trame via un port d'entrée pour l'émettre via un port de sortie. Pour ce faire, à la réception de chaque trame, chaque commutateur 22A,...,22N est par exemple apte à déterminer le type de cette trame et à la transmettre vers un port de sortie correspondant. Selon un autre exemple de réalisation, à la réception de chaque trame, chaque commutateur 22A,...,22N est apte à déterminer la valeur d'identification de cette trame et à déterminer le port de sortie correspondant à partir de cette valeur. Dans ce cas, chaque commutateur 22A,...,22N est par exemple apte à stocker une table de configuration comprenant pour chaque valeur d'identification, des règles de commutation des trames ayant cette valeur d'identification. Dans l'ensemble des cas, chaque commutateur 22A,...,22N est apte à transmettre chaque trame de premier type en priorité par rapport à chaque trame de deuxième type.

Selon différents exemples de réalisation, chaque commutateur 22A,...,22N est apte en outre à appliquer au moins une opération de filtrage à chaque trame de premier type et dans certains exemples, à chaque trame de deuxième type. Cette opération de filtrage peut comprendre le contrôle d'une période de cadencement des trames ayant la même valeur d'identification, le contrôle de la taille des paquets transmis par les trames, le contrôle de la durée de vie de trames, etc.

Chaque système d'extrémité 24A,...,24M, connu également sous le terme anglais de « End System » ou simplement sous le terme « équipement », est intégré dans un système avionique et assure la communication de ce système avec les réseaux 12, 14.

Ainsi, en fonction du système avionique dans lequel il est intégré, chaque système d'extrémité 24A,...,24M peut être émetteur et/ou récepteur de données numériques.

Par ailleurs, au moins certains des systèmes d'extrémité 24A,...,24M peuvent appartenir uniquement au réseau 12 ou uniquement au réseau 14. Dans ce cas, un tel système d'extrémité est apte à émettre et/ou à recevoir des données numériques uniquement de ce réseau. Au moins certains autres systèmes d'extrémité 24A,...,24M peuvent appartenir à la fois au réseau 12 et au réseau 14 dans la mesure où ils sont aptes à émettre et/ou à recevoir des données numériques de ces deux réseaux.

Chaque système d'extrémité 24A,...,24M est raccordé à au moins l'un des commutateurs 22A,...22N via des moyens de transmission et via au moins un port de ce commutateur. Les moyens de transmission présentent par exemple un câble à paire torsadée ou tout autre type de câble permettant une transmission bidirectionnelle de données ou encore des liaisons sans fil transmettant des données numériques via des ondes radioélectriques.

Tout comme les systèmes d'extrémité 24A,...,24M, chaque moyen de transmission peut appartenir uniquement à l'un des réseaux 12 et 14, ou alors à la fois aux deux réseaux 12 et 14. Cela dépend notamment de la nature de l'système d'extrémité 24A,...,24M que le moyen de transmission correspondant raccorde au réseau correspondant.

Au sein du réseau 12, 14 correspondant, chaque système d'extrémité 24A,...,24M est identifié par son adresse MAC. Notamment, dans le cas du réseau 12 de type ARINC 664 P7, plusieurs adresses MAC peuvent être associées à un même système d'extrémité 24A,...,24M. Chacune de ces adresses correspond à un lien virtuel conduisant à ce système d'extrémité 24A,...,24N.

Dans le case du réseau 14 de type IEEE 802, de manière générale une seule adresse MAC (adresse de type « unicast ») est par exemple associée à chaque système d'extrémité correspondant. Il existe également des adresses MAC de type « multicast » et aussi de type « broadcast » qu'un système d'extrémité doit être capable de recevoir.

Ainsi, lorsqu'un même système d'extrémité appartient à la fois aux deux réseaux 12 et 14, il peut être associé à une adresse MAC (de type « unicast ») pour le réseau 14 et à une ou plusieurs adresses MAC pour le réseau 12.

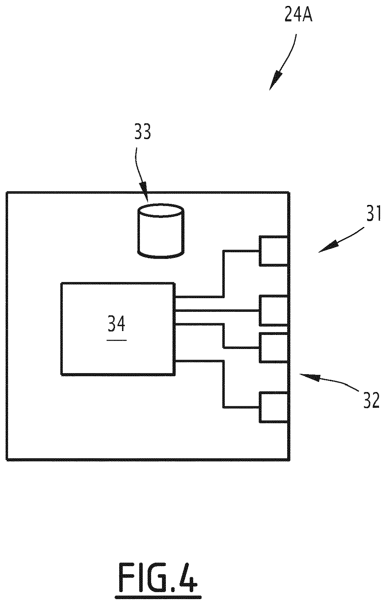

Par la suite, la structure du système d'extrémité 24A sera décrite en détail en référence à la figure 4. Il sera considéré par ailleurs que ce système d'extrémité 24A appartient à la fois aux deux réseaux 12 et 14, et est apte à émettre des trames dans ces réseaux et à recevoir des trames issues de ces réseaux. La structure des autres systèmes d'extrémité 24B,...,24M est analogue à celle-ci, avec des adaptations évidentes en fonction de la nature du système.

Ainsi, en référence à cette figure 4, le système d'extrémité 24A comprend une pluralité de ports d'entrée 31, une pluralité de ports de sortie 32, une table de configuration 33 et des moyens de contrôle 34. Il est à noter que sur cette figure, seuls les ports externes, c'est-à-dire les ports raccordant le système 24A aux réseaux 12 et 14 sont représentés. Des éventuels ports ou liaisons internes raccordant ce système d'extrémité 24A aux différentes composantes (applications) du systèmes avionique dans lequel il est intégré ne sont donc pas représentés et ne seront pas décrits en détail par la suite.

Chaque port d'entrée 31 est apte à recevoir des trames de premier type et/ou de deuxième type.

Chaque port de sortie 32 est apte à émettre des trames de premier type et/ou de deuxième type.

La table de configuration 33 permet de déterminer des règles de traitement des trames au sein du système d'extrémité 24A.

Pour ce faire, la table de configuration 33 est stockée dans une mémoire dédiée du système d'extrémité 24A, et comprend une liste de valeurs d'identification et pour chaque valeur d'identification, des paramètres de traitement des trames ayant cette valeur d'identification. Ces paramètres de traitement sont alors définis par chaque flux susceptible d'être émis ou reçu par le système d'extrémité 24A.

Selon un exemple avantageux de réalisation de l'invention, la mémoire du système d'extrémité 24A dédiée au stockage de la table de configuration est de type CAM. Autrement dit, cette mémoire est implémentée selon la technologie CAM (de l'anglais « Content Adressable Memory ») ce qui signifie que cette mémoire est adressable par le contenu.

Selon cet exemple, la mémoire du système d'extrémité 24A est initialisée avec la liste de valeurs d'identification. Cela signifie en particulier que chaque valeur d'identification présente une adresse de mémoire renvoyant vers un champ de stockage comprenant les paramètres de traitement correspondant à cette valeur d'identification. Cela permet alors de rendre la recherche des paramètres d'identification correspondant à une valeur d'indentification donnée très rapide, voire quasiment instantanée, en comparaison avec une recherche traditionnelle dans une liste.

Dans un mode de réalisation, la liste de valeurs d'identification est déterminée de manière statique. Cela signifie que cette liste est déterminée par exemple au stade de conception du système et ne peut pas être modifié au cours de son fonctionnement. Il s'agit donc d'un traitement prédéterminé des trames de chaque type.

Selon un autre mode réalisation, au moins certaines des valeurs d'identification de cette liste sont déterminées de manière dynamique. Autrement dit, ces valeurs peuvent être supprimées ou ajoutées au cours du fonctionnement du système 20. Dans ce cas, ces valeurs d'identification sont relatives uniquement aux flux de deuxième type. Il est à noter que lorsqu'une mémoire de type CAM est utilisée, une adresse de cette mémoire peut être également ajoutée ou supprimée dynamiquement à la suite d'un ajout ou d'une suppression d'une valeur d'identification.

Quant aux valeurs d'identification des trames de premier type, c'est-à-dire les valeurs d'identification des flux ARINC 664 P7, celles-ci ne peuvent être définies que de manière statique afin de garantir le déterminisme du réseau 12.

Pour chaque valeur d'identification des flux destinés à être reçus par le système d'extrémité 24A, les paramètres de traitement sont de même nature et sont notamment indépendants du protocole des trames du flux correspondant. Autrement dit, pour chaque valeur d'identification des flux destinés à être reçus par le système d'extrémité 24A, les paramètres de traitement sont avantageusement composés d'un même nombre de paramètres qui sont ordonnés de la même façon et ceci indépendamment du protocole du flux correspondant.

Ainsi, ces paramètres de traitement des flux destinés à être reçus par le système d'extrémité 24A, comprennent pour chaque valeur d'identification au moins un identifiant d'un port interne ou d'une liaison de transmission interne vers lequel chaque trame reçue par le système 24A doit être transmise.

Avantageusement, les paramètres de traitement des flux destinés à être reçus par le système d'extrémité 24A, comprennent en outre pour chaque valeur d'identification un paramètre indiquant la nécessité d'une gestion de redondance de chaque trame ayant cette valeur d'identification.

Avantageusement, dans un exemple particulier de réalisation de l'invention, ce paramètre est « vrai » pour chaque valeur d'identification correspondant à un flux de premier type et « faux » pour chaque valeur d'identification correspondant à un flux de deuxième type.

La gestion de la redondance est conforme aux exigences du protocole de type ARINC 664 P7. En particulier, de manière connue en soi, la gestion de redondance d'une trame comprend à l'émission de cette trame par le système d'extrémité correspondant, la génération de plusieurs répliques de cette trame et à la réception par le système d'extrémité correspondant, la comparaison de l'ensemble des répliques et en fonction de cette comparaison, le rejet de ces répliques ou la suppression d'au moins certaines d'entre elles pour ne garder que la trame d'origine. Les répliques correspondant à une même trame peuvent par exemple être déterminées en utilisant un numéro séquentiel inscrit à la fin de chaque trame. Dans l'exemple des trames du premier type, cela peut correspondre au champ SN illustré sur la figure 3 en relation avec la trame 15.

Ainsi, avantageusement selon l'invention, le mécanisme de redondance est appliqué à chaque trame de premier type et n'est pas perturbé par le trafic des trames de deuxième type.

Tout comme les paramètres de traitement des valeurs d'identification des flux destinés à être reçus par le système d'extrémité 24A, les paramètres de traitement des valeurs d'identification des flux destinés à être émis par le système d'extrémité 24A sont de même nature et sont notamment indépendants du protocole des trames du flux correspondant. Autrement dit, pour chaque valeur d'identification des flux destinés à être émis par le système d'extrémité 24A, les paramètres de traitement sont avantageusement composés d'un même nombre de paramètres qui sont ordonnés de la même façon et ceci indépendamment du protocole du flux correspondant.

Pour chaque valeur d'identification des flux destinés à être émis par le système d'extrémité 24A, les paramètres de traitement comprennent au moins une période de cadencement des trames du flux correspondant et au moins un port de sortie 32 des trames de ce flux.

La période de cadencement définit alors un cadencement pour les trames du flux correspondant à un intervalle minimal d'émission de deux trames consécutives d'un même flux.

Pour les flux de premier type, la période de cadencement est connue sous le terme anglais de « BAG » (pour « Bandwidth Allocation Gap »). Ce cadencement permet de définir notamment une bande passante autorisée pour le flux correspondant.

Selon un premier mode de réalisation, des périodes de cadencement sont également associées aux flux de deuxième type. Dans ce cas, les flux de deuxième type sont dits alors « BAGués » dans la mesure où des propriétés similaires à celles des flux de premier type sont associées à ces flux de deuxième type. Dans ce cas, il est donc également possible d'associer une bande passante prédéterminée pour chaque flux de deuxième type.

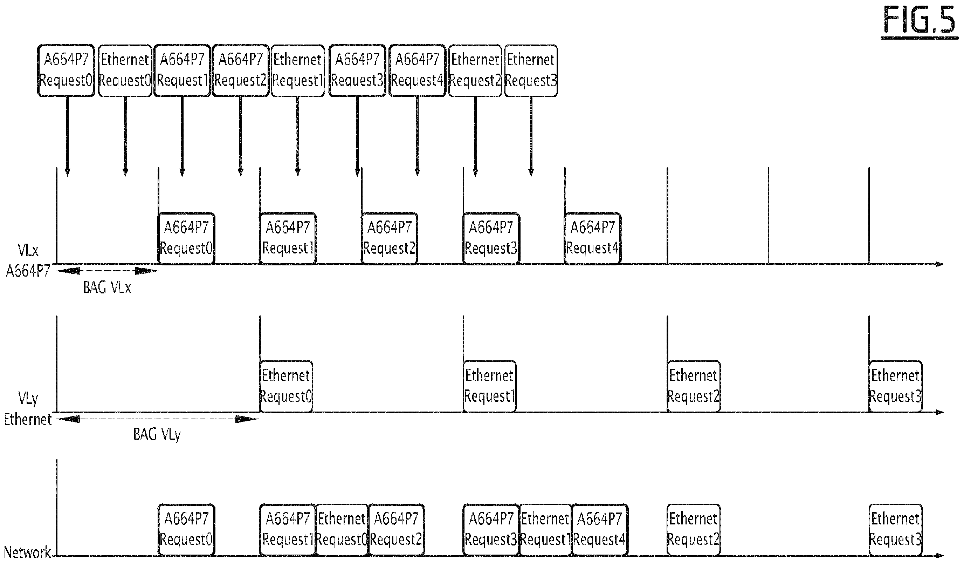

L'émission de trames selon ce premier mode de réalisation par un même port de sortie 32 est schématiquement illustrée sur la figure 5.

En particulier, selon l'exemple de cette figure, une période de cadencement BAGVLx est déterminée pour un flux de premier type et une période de cadencement BAGVLy est déterminée pour un flux de deuxième type. La période de cadencement BAGVLx est illustrée sur l'axe temporel VLx et la période de cadencement BAGVLy est illustrée sur l'axe temporel VLy.

Ces périodes sont déterminées en fonction de la bande passante disponible aux instants correspondants.

Ainsi, lors de l'émission des trames de premier type dénotées sur la figure 5 par « A664P7 REQUEST T0 », ..., « A664P7 REQUEST T4 » et des trames de deuxième type dénotées sur la figure 5 par « ETHERNET REQUEST T0 », ..., « ETHERNET REQUEST T3 », ces trames sont émises conformément à leurs périodes de cadencement comme cela est illustré sur l'axe temporel NETWORK. En outre, l'émission des trames de premier type s'effectue en priorité par rapport à l'émission des trames de deuxième type, comme cela a été expliqué en relation avec les commutateurs 22A,...,22N.

Selon un deuxième mode de réalisation, des périodes de cadencement prédéterminés ne sont pas associées aux flux de deuxième type. Dans ce cas, les valeurs correspondantes dans la table de configuration 33 peuvent être égales à une valeur prédéterminée (par exemple 0) qui signifie alors qu'aucune période de cadencement particulière n'est associée au flux correspondant.

Selon ce mode de réalisation, chaque port de sortie 32 est configuré pour émettre chaque trame de deuxième type par remplissage de la bande passante disponible après l'émission des trames de premier type correspondantes.

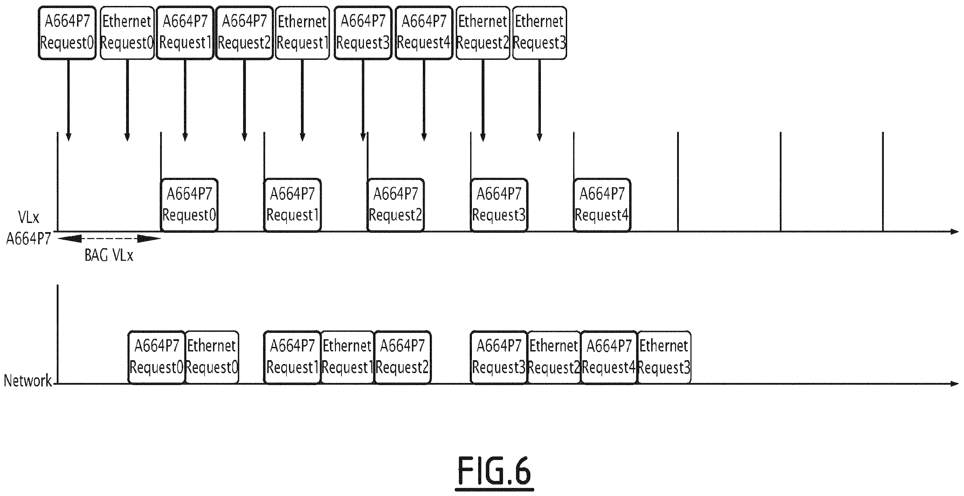

L'émission de trames selon ce deuxième mode de réalisation par un même port de sortie 32 est schématiquement illustrée sur la figure 6.

En particulier, selon l'exemple de cette figure, une période de cadencement BAGVLx est déterminée pour un flux de premier type et est illustrée sur l'axe temporel VLx.

Lors de l'émission des trames de premier type dénotées sur la figure 6 par « A664P7 REQUEST T0 », ..., « A664P7 REQUEST T4 », ces trames sont émises conformément à leur période de cadencement comme cela est illustré sur l'axe temporel NETWORK. En ce qui concerne les trames de deuxième type dénotées par « ETHERNET REQUEST T0 », ..., « ETHERNET REQUEST T3 », celles-ci sont émises dans les « trous » formés entre les émissions des trames par « A664P7 REQUEST T0 », ..., « A664P7 REQUEST T4 », comme cela est également visible sur l'axe temporel NETWORK. Ici, comme dans le cas précédent, les trames de premier type sont émises en priorité par rapport aux trames de deuxième type.

Dans un mode de réalisation particulier de l'invention, seuls les paramètres de traitement des valeurs d'identification des flux destinés à être reçus par le système d'extrémité 24A sont stockés dans la table de configuration 33 avec ces valeurs d'identification. Quant aux paramètres de traitement des flux destinés à être émis par le système d'extrémité 24A, ceux-ci sont stockés dans une table séparée ou dans tout autre moyen disponible.

Les moyens de contrôle 34 permettent de contrôler le fonctionnement de chaque port d'entrée 31 et de sortie 32 et se présentent par exemple sous la forme d'une unité centrale raccordée à chacun de ces ports, comme cela est représenté sur la figure 4.

Selon un autre exemple de réalisation, les moyens de contrôle et de commutation 34 sont distribués au moins partiellement entre les ports 31, 32 et permettent alors de contrôler localement le fonctionnement de chacun de ces ports.

Les moyens de contrôle 34 permettent également de commuter les trames au sein du système d'extrémité 24A entre chaque port d'entrée 31 et un port ou une liaison interne, et entre un tel port ou une liaison interne et un port de sortie 32, conformément aux paramètres de traitement du flux correspondant dans la table de configuration 33, comme expliqué précédemment.

Les moyens de contrôle 34 permettent également de mettre en oeuvre les mécanismes de gestion de redondance comme expliqué précédemment.

On conçoit alors que la présente invention présente un certain nombre d'avantages.

Tout d'abord, l'invention permet de mettre en oeuvre une mixabilité des réseaux de types ARINC 664 P7 et IEEE 802 en utilisant les mêmes composantes physiques, c'est-à-dire les mêmes moyens de transmission, les mêmes commutateurs et les mêmes ports d'entrée et de sortie.

Cela permet alors de diminuer considérablement l'encombrement et le poids des réseaux 12 et 14 à bord de l'aéronef 10.

Enfin, les systèmes d'extrémité sont configurés pour traiter les trames indépendamment de leur type, c'est-à-dire indépendamment du protocole de ces trames. Le fonctionnement de chaque systèmes d'extrémité peut être ainsi sensiblement identique pour chaque trame de sorte qu'il n'y a plus besoin de distinguer les trames de différents protocoles. Cela permet alors d'optimiser le fonctionnement des systèmes d'extrémité.

## Revendications

1. Système d'extrémité (24A) pour un système de communication avionique (20), le système de communication avionique (20) comprenant en outre une pluralité de commutateurs (22A, ..., 22N) raccordés entre eux pour former un ou plusieurs réseaux informatiques, le système d'extrémité (24A) étant configuré pour être raccordé à au moins l'un des commutateurs (22A, ..., 22N) pour recevoir et/ou émettre des données numériques sous la forme de trames à travers ce commutateur (22A, ..., 22N) ;
chaque trame ayant un champ d'identification et étant de premier type ou deuxième type, le champ d'identification de chaque trame définissant une valeur d'identification, les trames de premier type étant conformes à un protocole de type ARINC 664 P7 et les trames de deuxième type étant conformes à un protocole de type IEEE 802, l'ensemble des trames de premier type ayant une même valeur d'identification formant un même flux de premier type et l'ensemble des trames de deuxième type ayant une même valeur d'identification formant un même flux de deuxième type ;
le système d'extrémité (24A) étant **caractérisé en ce qu'**il comprend au moins un port d'entrée (31) apte à recevoir des trames, et une table de configuration (33) comprenant pour chaque valeur d'identification des paramètres de traitement des trames ayant cette valeur d'identification ; et
**en ce qu'**il est apte à déterminer un protocole de traitement de chaque trame reçue via le port d'entrée (31) exclusivement à partir des paramètres de traitement correspondant à la valeur d'identification de cette trame dans la table de configuration (33), indépendamment du type de cette trame.

2. Système d'extrémité (24A) selon la revendication 1, dans lequel la valeur d'identification est une adresse de destination de la trame.

3. Système d'extrémité (24A) selon la revendication 2, dans lequel le champ d'identification de chaque trame correspond au champ MAC DEST de cette trame.

4. Système d'extrémité (24A) selon l'une quelconque des revendications précédentes, dans lequel l'ensemble des valeurs d'identification des trames de chaque type et les paramètres de traitement correspondants sont déterminés de manière statique dans la table de configuration (33).

5. Système d'extrémité (24A) selon l'une quelconque des revendications précédentes, dans lequel pour chaque valeur d'identification, les paramètres de traitement comprennent un paramètre indiquant la nécessité d'une gestion de redondance de chaque trame ayant cette valeur d'identification.

6. Système d'extrémité (24A) selon l'une quelconque des revendications précédentes, comprenant en outre au moins un port de sortie (32) apte à émettre des trames de premier type et/ou de deuxième type.

7. Système d'extrémités (24A) selon la revendication 6, configuré pour émettre chaque trame de deuxième type selon une période de cadencement prédéfinie par la valeur d'identification de cette trame.

8. Système d'extrémité (24A) selon la revendication 7, dans lequel chaque période de cadencement est définie par les paramètres de traitement associés à la valeur d'identification correspondante.

9. Système d'extrémité (24A) selon la revendication 6, configuré pour émettre chaque trame de deuxième type par remplissage de la bande passante disponible après l'émission des trames de premier type correspondantes.

10. Système de communication avionique (20) comprenant au moins deux systèmes d'extrémité (24A, ..., 24M) et au moins un commutateur (22A, ..., 22N) connecté à chacun des systèmes d'extrémité systèmes d'extrémité (24A, ..., 2M), chaque système d'extrémité (24A, ..., 24M) étant selon l'une quelconque des revendications précédentes.
